Europäisches Patentamt

(19) European Patent Office

Office européen des brevets

(11) EP 0 843 285 A2

## (12) EUROPEAN PATENT APPLICATION

(43) Date of publication:
20.05.1998 Bulletin 1998/21

(51) Int. Cl.$^6$: **G06T 17/50**

(21) Application number: 97120292.4

(22) Date of filing: 19.11.1997

(84) Designated Contracting States:
AT BE CH DE DK ES FI FR GB GR IE IT LI LU MC
NL PT SE
Designated Extension States:
AL LT LV MK RO SI

(30) Priority: 19.11.1996 JP 322142/96

(71) Applicant:
MATSUSHITA ELECTRIC INDUSTRIAL CO., LTD.
Kadoma-shi, Osaka 571 (JP)

(72) Inventor: Onishi, Hirofumi
Yokohama-shi, Kanagawa 227 (JP)

(74) Representative:
Kügele, Bernhard et al
NOVAPAT INTERNATIONAL SA,
9, Rue du Valais
1202 Genève (CH)

(54) **Method for the preparation of the raster map data**

(57) This is a method of preparation of raster map data by applying latitude and longitude coordinates to the electronic data map prepared in an electronic image file format from a paper map or the like.

Existing map data and electronic data map are displayed simultaneously, and corresponding two or more objects of data on two displayed maps are designated by clicking a mouse, so that the latitude and longitude coordinates on the existing map data are related with the dot coordinates on the electronic data map. According to the correspondence of the latitude and longitude coordinates and dot coordinates, by providing the electronic data map with latitude and longitude coordinates, raster map data is prepared.

EP 0 843 285 A2

**Description**

BACKGROUND OF THE INVENTION

The present invention relates to a method of preparation of raster map data used in map display device or the like. In particular, in preparation of raster map data used in map display device for traffic or tourist guide, or map display device for monitoring and command of operation of taxis, police cars and trucks, it relates to a method of preparation of raster map data for determining the coordinates of longitude and latitude of electronic data map by indicating objects in existing map.

The raster map data is the map data used in image housing map display device or taxi map display system. A conventional method of preparing raster map data is realized by input of coordinates of latitude and longitude of four corners of a paper map.

In such conventional method of preparation of raster map data, however, it is required that coordinates of four corners of paper map are known or that the paper map is prepared according to the standard system of coordinates so that the coordinates of four corners may be calculated easily. Therefore, if the coordinates of four corners of paper map are not known and cannot be easily calculated, it is necessary to calculate and enter the coordinates of four corners by referring to other reference map, which required a tremendous manpower.

SUMMARY OF THE INVENTION

It is hence an object of the invention to solve the above problems, and present a method of preparation of raster map data capable of providing an arbitrary paper map easily with coordinates and preparing raster map data.

To achieve the object, the method of preparation of raster map data of the invention is characterized by preparing an image file from a paper map, displaying existing map data and this prepared image file simultaneously, designating two or more corresponding objects, providing the image file with coordinates, and preparing raster map data.

Therefore, according to the method of preparation of raster map data of the invention, raster map data can be prepared from an arbitrary map by a simple operation by, for example, clicking the corresponding objects on the simultaneously displayed existing map data and image file by a mouse.

It is a further benefit that the map to be used may be a map with unknown coordinates of four corners, a map of unknown system of coordinates or drafting method, or aerial photograph or topographic map.

BRIEF DESCRIPTION OF THE DRAWINGS

Fig. 1 is a system diagram showing an embodiment of method of preparation of raster map data according the invention.

Fig. 2 is a diagram showing an example of operation and display of coordinates providing means in a first embodiment and a second embodiment of the invention.

Fig. 3 is a diagram showing an example of operation and display of coordinates providing means in a third embodiment of the invention.

Fig. 4 is a diagram showing an example of display of existing map data and simplified image file for explaining the correction method of distortion of a parallelogram in a fourth embodiment of the invention.

Fig. 5 is a diagram showing an example of display of existing map data and simplified image file for explaining the correction method of distortion of a trapezoid in a fifth embodiment of the invention.

Fig. 6 is a diagram showing an example of display of existing map data and simplified image file for explaining the correction method of distortion of a graphic pattern in a sixth embodiment of the invention.

DESCRIPTION OF THE PREFERRED EMBODIMENTS

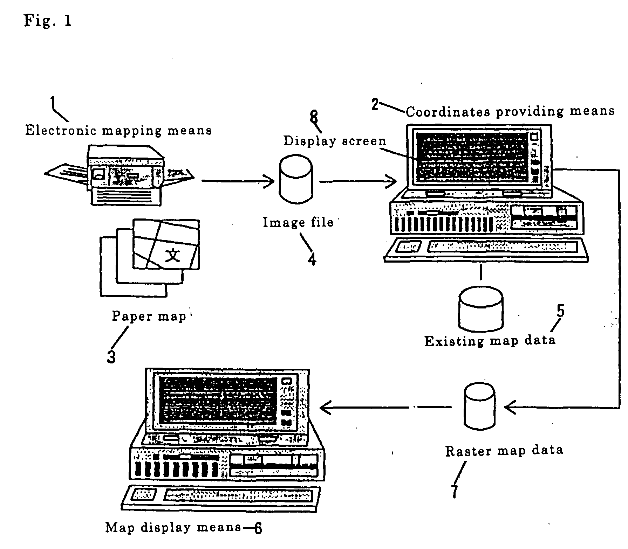

Fig. 1 is a system diagram showing an embodiment of method of preparation of raster map data according the invention. First, referring to Fig. 1, a first embodiment is described below.

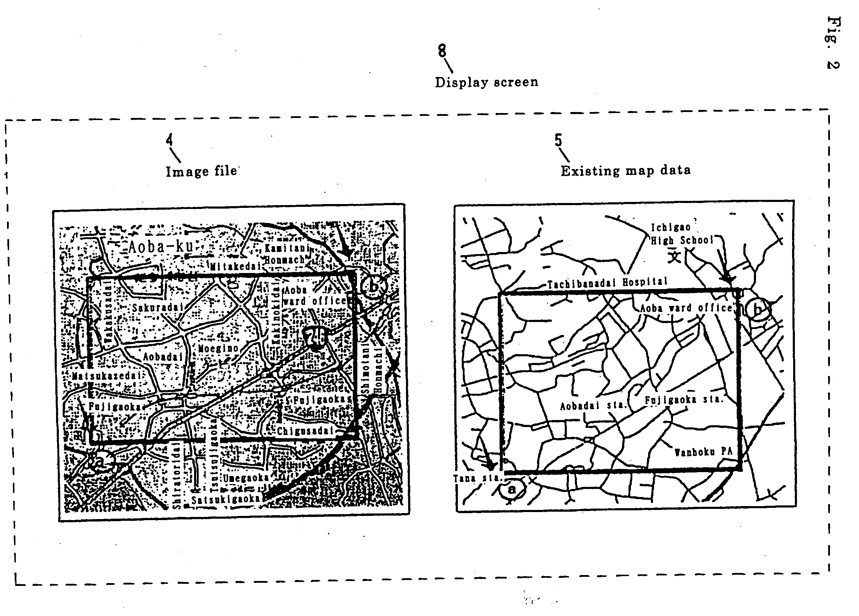

In Fig. 1, by electronic mapping means 1, for example, a scanner, an image file 4 of electronic data map is prepared from a paper map 3. Coordinate providing means 2 displays both the image file 4 and existing map data 5 simultaneously on a display screen 8 as shown in Fig. 2. The operator clicks the corresponding two objects on the two displayed map data by using a mouse to relate with each other.

By this operation, by the correspondence between the longitude and latitude coordinates of the existing map data 5 and the dot coordinates, the longitude and latitude coordinates are provided in the electronic data map of the image file 4, and raster map data 7 is prepared. Thus prepared raster map data is displayed in map display means 6.

In thus prepared raster map data 7, suppose two objects, object a of which dot coordinates are (Xa [dot], Ya [dot]) and object b of which dot coordinates are (Xb [dot], Yb [dot]), correspond to two points on the existing map data 5, that is, point a of which longitude and latitude are (lon a, lat a) and point b of which longitude and latitude are (lon b, lat b).

Assuming the latitude and longitude are entered as, for example, north latitude of 35 degrees, 40 minutes, 0 second, and east longitude of 139 degrees, 45 minutes, 0 second, it is supposed that the position is expressed in the unit of seconds for the ease of explanation, and therefore the number of dots per second of longitude on the electronic data map is

$$mx = (Xb-Xa)/(lon\ b-lon\ a)\ (where\ lon\ b \neq lon\ a),\ and$$

the number of dots per second of latitude on the electronic data map is

$$my = (Yb-Ya)/(lat\ b-lat\ a)\ (where\ lat\ b \neq lat\ a).$$

The dot coordinates of the lower left corner of the electronic data map is supposed to be (0 [dot], 0 [dot]).

When thus prepared raster map data is displayed in the center of the arbitrary longitude and latitude coordinates (lon X, lat Y), it is expressed in the center of the dot coordinates (X [dot], Y [dot]) as given in the formulas:

$$X\ [dot] = \{(lon\ X-lon\ a)/(lon\ b-lon\ a)\} \times (Xb\ [dot]-Xa\ [dot]) +Xa\ [dot]$$

$$Y\ [dot] = \{(lat\ Y-lat\ a)/(lat\ b-lat\ a)\} \times (Yb\ [dot]-Ya\ [dot]) +Ya\ [dot]$$

That is, the dot coordinates of electronic data map can be given.

In this way, by such a simple operation as to designate two corresponding objects by clicking the mouse, for example, raster map data can be prepared from an ordinary paper map.

In Fig. 1, coordinates providing means 2 and map display means 6 are depicted as different terminals, but it is also possible to perform the operation of two means by using a same terminal. Moreover, if the paper map is available in an electronic format such as image file, the electronic mapping means 1 is not needed. In Fig. 2, two maps are displayed side by side, but they may be overlapped in display.

As the object designating method, an existing map may be pointed by a digitizer or the like, and the longitude and latitude may be taken in. Besides, as the means for indicating the object of the image file, a pointing device such as light pen and cross hair cursor may be used. The coordinates on the screen may be also entered from the keyboard.

In the explanation of the embodiment of the invention in Fig. 1, it is assumed that the image file map is free from distortion or rotation. Incidentally, if two objects are positioned on the same latitude or same longitude, the number of dots mx per unit latitude or the number of dots my per unit longitude is not determined, and therefore when selecting two points, it is important to select points not located on the same horizontal line or vertical line. Besides, if the latitudes or longitudes of two points are close to each other, the error is large, and the two points are preferred to be apart from each other as far as possible.

Concerning a second embodiment, a method of preparation of raster map data by correcting rotation of electronic data map is described below.

When converting the paper map 3 into the image file 4 by the electronic mapping means 1 shown in the embodiment in Fig. 1, it is considerably difficult to transform into electronic data by setting the paper map 3 correctly to the north. Instead of the paper map 3, when transforming an aerial photograph or topographic map into electronic data, even the correct north direction may be unknown. In the electronic data map of the image file 4 in Fig. 2, it is assumed that the direction is rotated although it is free from distortion.

The electronic data map of the image file 4 and existing map data 5 are simultaneously displayed in the coordinates providing means 2 as shown in Fig. 2. By designating two objects a, b on the existing map data 5 displayed in the coordinate providing means 2 and corresponding two objects a, b on the electronic data map in the image file 4 by clicking the mouse, the latitude and longitude of the two points a, b on the electronic data map are known.

The distance per second of latitude is always constant, and the distance per second of longitude can be calculated when the latitude is known, and therefore if the absolute values of latitude and longitude are known, the distance per unit latitude and the distance per unit longitude will be determined. Therefore, when two points a, b are designated, the aspect ratio of a rectangle having line segment ab as diagonal line is determined, and therefore if the aspect ratio of the rectangle of the electronic data map of the image file 4 does not coincide with the calculated value, it is known that the electronic data map is rotated. Accordingly, by rotating the electronic data map so as to match with the aspect ratio of the rectangle, an electronic data map in correct direction is obtained. In this way, by processing same as in the first embodiment after correcting the rotation of the electronic data map, the number of dots per second of latitude and the number of dots per second of longitude will be obtained.

Therefore, if the electronic data map is only rotated without distortion, by designating two object points a and b, the rotation of the electronic data map can be corrected, and an electronic data map provided with latitude and longitude coordinates in correct direction can be prepared.

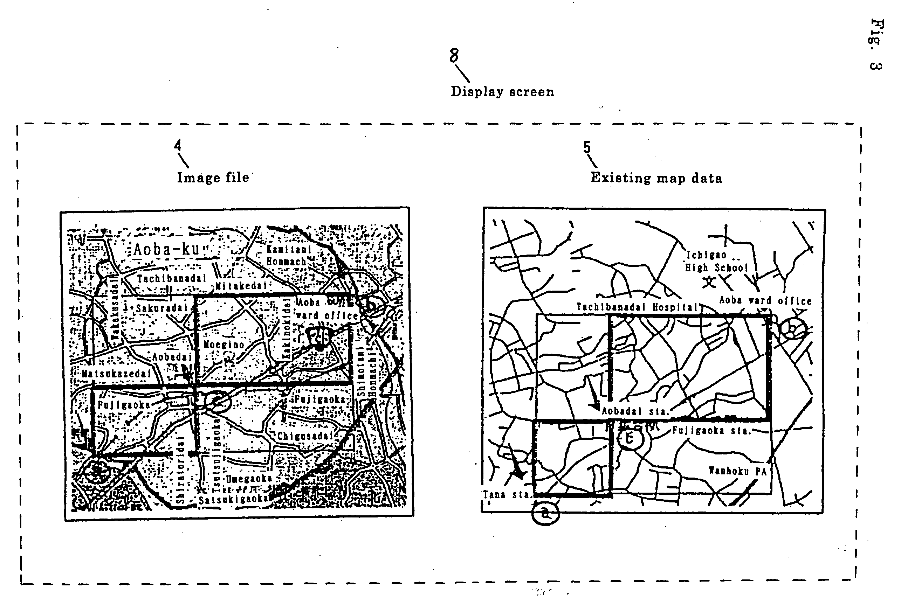

A third embodiment of method of preparation of raster map data according to the invention is described below. In the third embodiment, by designating three objects, the error can be reduced as compared with the case of designating two objects. Fig. 3 shows a display screen displaying the image file 4 and existing map data 5 simultaneously in this case.

As shown in Fig. 3, three objects are related on the image file and existing map data. That is, as compared with the case in which the objects at points a and b are processed by corresponding, dividing into a section of a and c and a section of c and b, the same processing as explained in the first embodiment is executed. By thus dividing into sections, the dot interpolating interval is shorter, thereby decreasing effects of errors due to difference in the system of coordinates, paper distortion, drafting error, or electronic mapping error.

A fourth embodiment of the invention is described below. The fourth embodiment is intended to correct distortion and rotation of parallelogram of electronic data map and provide with latitude and longitude coordinates.

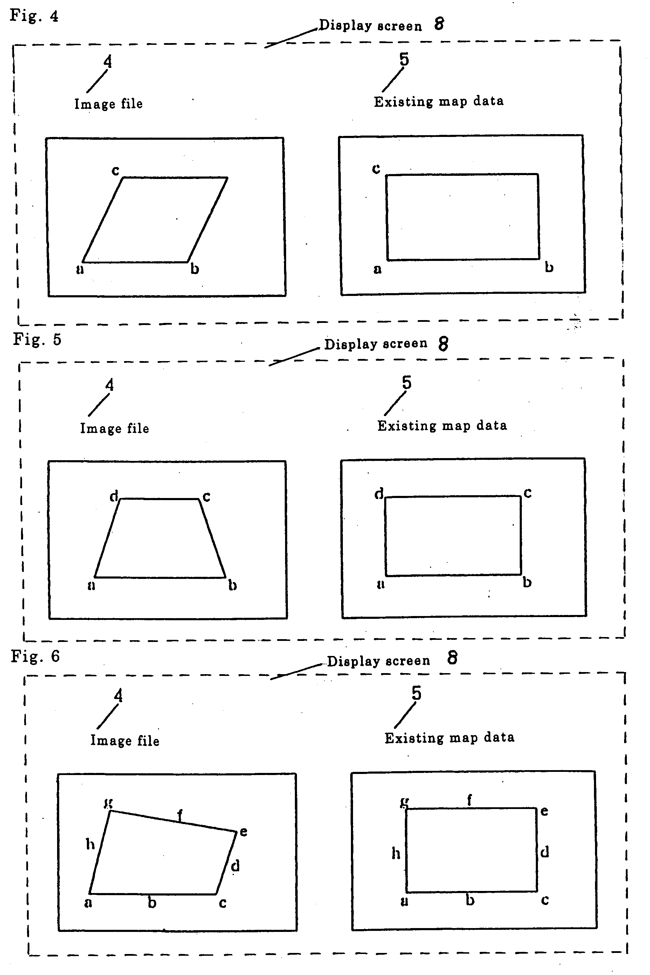

If the electronic data map is rotated or the rectangular topographic map is distorted to be parallelogram, by setting objects at three points a, b, c as shown in Fig. 4, such rotation and parallelogram distortion can be corrected. Herein, however, it is not supposed that the rectangle is deformed into a trapezoid.

In Fig. 4, if three points c, a, b orthogonally crossing in the existing map data 5 are distorted to cross obliquely as in points c, a, b on the image file 4, the distortion can be corrected by transforming the coordinates so that the three points c, a, b on the image file 4 may cross orthogonally.

Supposing this coordinate transforming formula to be

$$X = Ax + B \text{ (where X is a vector of a point on a corrected map, x is a vector of a point on a map before}$$
$$\text{correction, B is a vector showing parallel move, and A is a matrix of } 2 \times 2),$$

by putting the data of three points a, b, c into the coordinates transforming formula, six equations are obtained. Since there are six elements of unknown numbers A and B, the equations can be solved, and the transforming formula is determined. In this case, the rectangle distorted into a parallelogram can be corrected to the rectangle, and the rotation can be corrected.

A fifth embodiment of the invention is described below. This fifth embodiment is to correct the distortion of a rectangle into a trapezoid, instead of the parallelogram mentioned above.

When taking an aerial photograph, a distortion-free photograph is obtained when the camera is set in the perpendicular direction, but if the shooting direction is deviated from the perpendicular direction, a rectangular topography is distorted into a trapezoid. In such a case, the trapezoid can be corrected to the rectangle by designating four points as the objects.

Fig. 5 shows a mode of correction of trapezoidal distortion by designating four objects in this embodiment of the invention.

In Fig. 5, an image file 4 of electronic data map created from an aerial photograph and existing map data 5 of the corresponding region are simultaneously displayed on a display screen by the coordinates providing means 2 as shown in the embodiment in Fig. 1 same as in Fig. 2.

By designating the object a of the existing map data 5 displayed thus on the display screen of the coordinates providing means 2 by clicking the mouse, and designating the corresponding object a on the image file 4 successively by clicking the mouse, the latitude and longitude coordinates of the object a of the existing map data 5 and the dot coordinates of the object a on the image file 4 are related with each other. This operation is done on the other objects b, c, d. Incidentally, in Fig. 5, the objects a, b, c, d of the existing map data 5 are designed to compose a rectangle, but it is not limited to a rectangle alone, and by designating proper four points and determining the latitude and longitude coordinates on the image file 4, the lattice supposed to be a rectangle is distorted into a trapezoid, which is a general case as experience often.

By detecting trapezoidal distortion of the latitude and longitude coordinates of the image file 4, when the coordinates are transformed to correct it, a correct topographic map will be obtained. For example, in the case of Fig. 5, by processing so as to expand in the lateral direction as going upward on the screen, the trapezoid can be corrected into a rectangle. After thus correcting into a rectangle of a same aspect ratio, by processing same as in the first embodiment, the latitude and longitude coordinates can be given to the electronic data map of the image file.

Moreover, a sixth embodiment of the invention is described below. In this sixth embodiment, by designating multiple points as the objects, a distorted topographic map can be provided with precise coordinates.

Fig. 6 is a diagram for explaining the sixth embodiment of the invention, showing provision with latitude and longitude coordinates by designating five or more targets.

In Fig. 6, all objects a to h of the rectangle on the existing map 5 are designated by clicking the mouse, and the corresponding objects a to h on the image file are similarly designated by clicking the mouse. If the objects a to h do not compose a rectangle in the electronic data map on the image file, the coordinates are transformed so that the pattern of a to h may be a rectangle, and the electronic data map is corrected, so that a same map as the existing map can be created.

In the case of the image file 4 shown in Fig. 6, by processing to expand or reduce depending on the position so that line segment abc and line segment efg may be parallel to each other, and by processing to expand or reduce vertically or laterally so that line segment cde and line segment gha may be parallel to each other, the graphic pattern will be rectangular. In order that the aspect ratio of this rectangle may be same as the aspect ratio of the existing map data, by expanding or reducing vertically or laterally, a correct topographic map is obtained. By further rotating so that the latitude and longitude may be horizontal and vertical, respectively, a topographic map of correct azimuth is obtained.

When setting five or more objects, considering the projection method of the map, various methods of coordinates transform may be available, but it does not seem necessary to consider the difference in the projection method, except in wide-range aerial photograph or satellite photograph. In a narrow-range map, if the latitude and longitude may be approximated by expression of Cartesian coordinates, a corresponding straight line is determined by the method of least squares as required from the latitude and longitude coordinates of five or more objects, and the coordinates are transformed so that the rectangle in the existing map may be a same rectangle also on the image file, so that the latitude and longitude coordinates may be given more precisely than the case of designating four objects.

In the case of taking a wide range in which the roundness of the globe cannot be ignored, such as a satellite photograph, it is necessary to calculate to determine the coordinates transform depending on the method of projection, and the photographic conditions may be taken into consideration when determining, and therefore the coordinates cannot be transformed by one method of calculation alone. However, as the method of giving the latitude and longitude, by instructing the corresponding points from the existing map by using the mouse or the like, it is evident that it can be applied in designation of latitude and longitude in the satellite photograph.

In the foregoing embodiments of the invention, as the image file map, the paper map or aerial photograph is taken in by an image scanner or the like to plot electronic data map of image file, but it is evident that it can be used in application of coordinates of latitude and longitude to the map data of image file initially existing as electronic data, such as image data of aerial photograph taken by a digital camera.

The invention, as clear from the embodiments herein, can apply latitude and longitude coordinates to the electronic data map of image file created from an arbitrary paper map and prepare raster map data, only by relating two or more objects on the existing map data and the electronic data map of image file displayed simultaneously by the coordinates providing means.

Therefore, by simple operation of only designating the corresponding objects by the mouse of the like, the invention can create raster map data.

Not limited to the map, same effects can be obtained in image data such as aerial photograph, satellite photograph, and sketch.

In the explanation of the embodiments of the invention, according to the correspondence of the latitude and longitude coordinates of the existing map and the dot coordinates of the electronic data map, the electronic data map is provided with latitude and longitude coordinates, but instead of the number of dots, of course, other scale may be also used.

The invention is illustrated in several specific examples herein, but other modified methods are also included in the scope of the claims described below.

## Claims

1. A method of preparation of raster map data comprising:

   a first step of storing electronic data map into an image file,
   a second step of displaying the electronic data map on the image file and existing map data simultaneously,
   a third step of relating two or more objects on the electronic data map and two or more objects on the existing map data, and
   a fourth step of providing the electronic data map with latitude and longitude coordinates, by relating the latitude and longitude data of the objects of the existing map data and the coordinates of the corresponding objects on the electronic data map.

2. A method of preparation of raster map data of claim 1, wherein the third step includes a step of storing data of latitude and longitude of the objects by instructing two objects on the existing map, and a step of relating the coordinates of the electronic data map and data of latitude and longitude by instructing two corresponding objects on the electronic data map.

3. A method of preparation of raster map data of claim 2, wherein the third step includes a process of correcting the rotation of the electronic data map from the correspondence of the two coordinates of the electronic data map and the data of latitude and longitude.

4. A method of preparation of raster map data of claim 1, wherein the third step includes a step of storing data of latitude and longitude of the objects by instructing three objects on the existing map, and a step of relating the coordinates of the electronic data map and data of latitude and longitude by instructing three corresponding objects on the electronic data map.

5. A method of preparation of raster map data of claim 4, wherein the third step includes a step of correcting rotation of the electronic data map and distortion of parallelogram, from the correspondence of coordinates of three coordinates on the electronic data map and data of latitude and longitude.

6. A method of preparation of raster map data of claim 1, wherein the third step includes a step of storing data of latitude and longitude of the objects by instructing four objects on the existing map, and a step of relating the coordinates of the electronic data map and data of latitude and longitude by instructing four corresponding objects on the electronic data map.

7. A method of preparation of raster map data of claim 6, wherein the third step includes a step of correcting rotation of the electronic data map and distortion of trapezoid, from the correspondence of coordinates of four coordinates on the electronic data map and data of latitude and longitude.

8. A method of preparation of raster map data of claim 1, wherein the third step includes a step of storing data of latitude and longitude of the objects by instructing five or more objects on the existing map, and a step of relating the coordinates of the electronic data map and data of latitude and longitude by instructing five or more corresponding objects on the electronic data map.

9. A method of preparation of raster map data of claim 8, wherein the third step includes a step of correcting rotation and distortion of the electronic data map, from the correspondence of coordinates of five or more coordinates on the electronic data map and data of latitude and longitude.

10. A method of preparation of raster map data of claim 1, wherein the fourth step includes a step creating latitude and longitude coordinates of the electronic data map, by determining the number of dots per unit latitude and the number of dots per unit longitude, from the correspondence of two coordinates of the electronic data map or the electronic data map corrected of rotation and distortion and the data of latitude and longitude of the existing map.

Fig. 1

Electronic mapping means  1

Display screen  8

Coordinates providing means  2

Paper map  3

Image file  4

Existing map data  5

Raster map data  7

Map display means—6

Fig. 2

Fig. 3

Fig. 4

Display screen **8**

4

Image file

5

Existing map data

Fig. 5

Display screen **8**

4

Image file

5

Existing map data

Fig. 6

Display screen **8**

4

Image file

5

Existing map data